Europäisches Patentamt

European Patent Office

Office européen des brevets

(19)

(11) Numéro de publication : **0 020 191**

**B1**

(12) # FASCICULE DE BREVET EUROPÉEN

(45) Date de publication du fascicule du brevet :
24.11.82

(51) Int. Cl.³ : **F 28 C 1/16**

(21) Numéro de dépôt : 80400497.6

(22) Date de dépôt : 15.04.80

(54) **Dispositif pour le mélange des flux d'air secs et humides de réfrigérant atmosphérique mixte à flux d'air parallèles.**

(30) Priorité : 09.05.79 FR 7911715

(43) Date de publication de la demande :
10.12.80 (Bulletin 80/25)

(45) Mention de la délivrance du brevet :
24.11.82 Bulletin 82/47

(84) Etats contractants désignés :
AT BE CH DE FR GB IT LI LU NL SE

(56) Documents cités :
DE C 296 775
FR A 2 234 540
FR A 2 262 790
US A 3 846 519

(73) Titulaire : HAMON-SOBELCO S.A. Société dite:
50-58, Rue Capouillet
B-1060 Bruxelles (BE)

(72) Inventeur : Carbonaro, Mario Giuseppe Benedetto
124, Rue Berkendael
B-1060 Bruxelles (BE)

(74) Mandataire : Moncheny, Michel et al
c/o Cabinet Lavoix 2 Place d'Estienne d'Orves
F-75441 Paris Cedex 09 (FR)

Jouve, 18, rue St-Denis, 75001 Paris, France

EP 0 020 191 B1

Dispositif pour le mélange des flux d'air secs et humides de réfrigérant atmosphérique mixte à flux d'air parallèles

La présente invention concerne un dispositif pour le mélange des flux d'air secs et humides de réfrigérant atmosphérique mixte à flux d'air parallèles comportant un corps d'échange thermique humide et un corps d'échange thermique sec, disposés en parallèle dans les flux d'air.

Ces réfrigérants mixtes comprennent généralement une ou plusieurs ouvertures constituant une première entrée d'air et l'air provenant de cette première entrée est mis directement en contact avec le liquide à refroidir dans le corps d'échange thermique humide. Dans le corps d'échange thermique dit sec, dont les éléments échangeurs sont disposés verticalement ou non à la périphérie de la tour dans une ou plusieurs ouvertures constituant une deuxième entrée d'air en parallèle avec la première, l'air n'est pas directement en contact avec le liquide, ce dernier circulant dans les éléments échangeurs, par exemple des tubes à ailettes ou des tubes lisses en matière métallique ou en matière synthétique. Ces réfrigérants peuvent être à tirage naturel ou à tirage forcé, induit par des ventilateurs aspirants ou soufflants.

Les réfrigérants mixtes visent à éviter la formation de nuages à la sortie de l'installation comme cela se produit généralement à la sortie des réfrigérants humides ordinaires. Or, il s'avère que ce résultat n'est atteint que de façon partielle et qu'il subsiste souvent des filets nuageux résultant du mélange insuffisant de l'air chaud et humide issu de l'échangeur humide, et s'écoulant au centre de la tour, avec l'air chaud et sec issu de l'échangeur sec, et s'écoulant à la périphérie de la tour.

Il est déjà connu, pour tenter de résoudre ce problème du mélange des deux flux d'air, de disposer à l'intérieur de la tour de réfrigération des surfaces de déflexion qui provoquent une turbulence du courant d'air sec et le dévient vers le centre de la tour.

Dans certains agencements, ces surfaces de déflexion sont constituées par des aubes directrices recourbées en languettes et s'engageant dans le courant d'air humide, qui ont pour fonction d'imprimer un mouvement giratoire à l'air sec et de diriger en même temps une fraction de l'air dans l'axe de la tour de réfrigération.

Dans le brevet français n° 22 75 744, on a décrit une installation d'échange thermique entre un liquide et un gaz du type comprenant une tour à la base de laquelle le flux de gaz qui pénètre dans l'installation traverse au moins un dispositif d'échange thermique, ladite installation comportant au moins un déflecteur disposé dans la tour au-dessus du dispositif d'échange thermique et adapté pour dévier au moins une partie du flux de gaz vers la périphérie de la tour.

L'invention vise à adapter la technique précitée à un dispositif pour le mélange des flux d'air secs et humides de réfrigérants atmosphériques mixtes à flux d'air parallèles.

L'invention, telle qu'elle est caractérisée dans les revendications, résout le problème du mélange des flux d'air secs et humides grâce au fait que les plaques en forme d'aile d'avion engendrent des tourbillons qui donnent dans la chambre de mélange du réfrigérant une turbulence qui assure un brassage des flux d'air et, en conséquence, leur mélange.

D'autres caractéristiques de l'invention apparaîtront au cours de la description qui va suivre, faite en référence aux dessins annexés, donnés uniquement à titre d'exemple, et sur lesquels :

la Figure 1 est une vue en élévation et en coupe d'un réfrigérant mixte pourvu de déflecteurs-mélangeurs suivant l'invention ;

la Figure 2 est une vue en coupe de profil du réfrigérant de la Fig. 1 ;

la Figure 3 est une coupe suivant la ligne 3-3 de la Fig. 1 ;

la Figure 4 est une vue en élévation et en coupe d'une variante du réfrigérant de la Fig. 1 ;

la Figure 5 est une vue de profil et en coupe du réfrigérant de la Fig. 4 ;

la Figure 6 est une coupe suivant la ligne 6-6 de la Fig. 4 ;

la Figure 7 est une vue analogue à celle de la Fig. 6 mais montrant des déflecteurs dont les bases présentent une largeur différente de celle des déflecteurs de l'agencement de la Fig. 6 ;

la Figure 8 est une coupe en plan d'un autre mode de réalisation de réfrigérant mixte suivant l'invention ;

la Figure 9 est une vue de profil en coupe du réfrigérant de la Fig. 8 ;

la Figure 10 est une coupe en élévation d'un réfrigérant à courants croisés auquel est appliquée l'invention ;

la Figure 11 schématise les tourbillons engendrés par les triangles déflecteurs ; et

les Figures 12 à 21 sont des vues schématiques en plan montrant différentes formes de réalisation des plaques déflectrices.

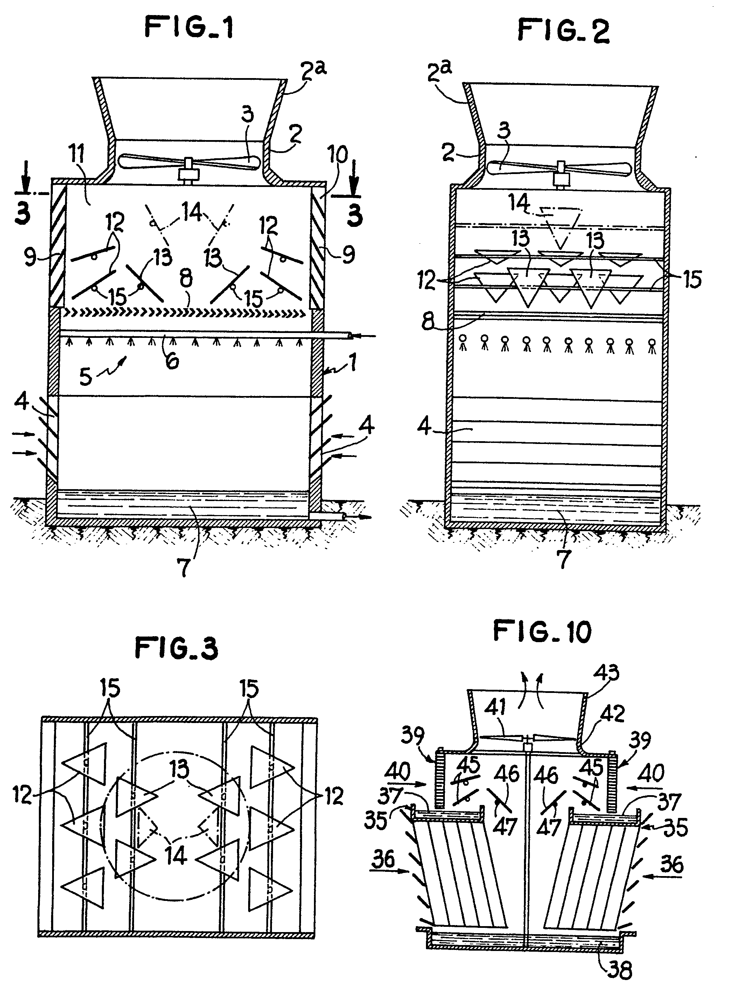

Sur la Fig. 1, l'invention est considérée comme étant appliquée à une cellule de réfrigération à ventilateur aspirant.

L'installation de la Fig. 1 comporte une tour 1 terminée à sa partie supérieure par une virole 2 et un diffuseur 2a. Dans l'orifice circulaire de la virole est monté un ventilateur aspirant 3.

La tour 1 comporte à sa base des ouvertures périphériques inférieures 4 constituant une entrée d'air pour un corps d'échange thermique humide 5. Ce corps d'échange thermique humide est du type dans lequel l'air atmosphérique entrant dans les ouvertures 4 est directement en contact avec de l'eau provenant d'un réseau de distribution 6. Ce corps d'échange thermique humide ou de mise en contact 5, qui s'étend sur toute ou à peu près toute la section interne de la tour, est dit à « contre-courant », c'est-à-dire que le flux d'air s'y déplace dans une direction ascendante opposée à celle de l'eau.

L'eau de ruissellement déversée par le réseau de distribution 6 est recueillie dans un bassin 7.

Au-dessus du réseau de distribution 6 est disposé un séparateur de gouttes 8 constitué par exemple de panneaux de feuilles ondulées parallèles dont les arêtes des ondulations sont horizontales et qui définissent entre elles un trajet sinueux le long duquel le flux d'air ascendant est débarrassé d'une partie des gouttelettes qu'il contient en suspension après sa mise en contact avec l'eau.

Au-dessus du corps d'échange thermique humide 5, la tour comporte des ouvertures périphériques supérieures 9 constituant des entrées d'air pour un corps d'échange thermique sec 10. La partie de la tour 1 pourvue des ouvertures 9 constitue en fait une chambre de mélange 11 des flux d'air humides et secs provenant respectivement du corps d'échange thermique humide 5 et du corps d'échange thermique sec 10.

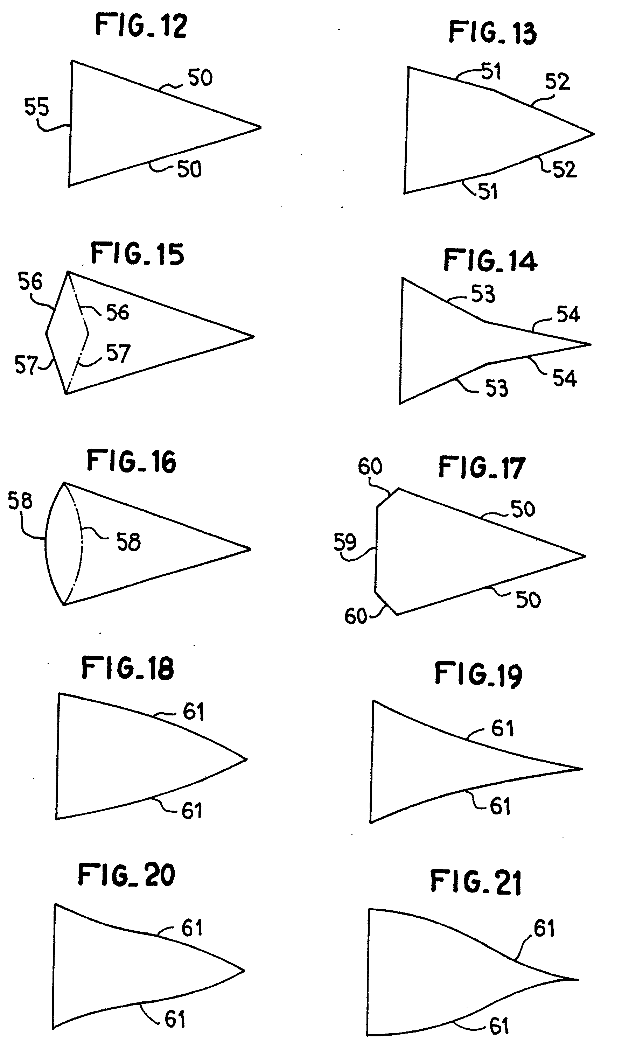

Dans la chambre 11 sont disposées des rangées de plaques déflectrices triangulaires 12 et 13. Les plaques déflectrices ont la forme de triangles isocèles d'angle au sommet inférieur à 65°, comme représenté en plan à la Fig. 12, les sommets desdits triangles étant dirigés vers l'amont des flux d'air. Les déflecteurs 12 disposés au voisinage de la périphérie de la chambre 11, à proximité des ouvertures d'entrée 9 du corps d'échange thermique sec 10, sont destinés à dévier les flux d'air sec tandis que les déflecteurs 13 disposés immédiatement au-dessus du séparateur de gouttes 8, sont destinés à infléchir les flux d'air humide provenant du corps d'échange thermique humide 5.

On a en outre représenté en traits mixtes, dans la partie supérieure de la chambre 11, des déflecteurs éventuels 14 destinés à créer une turbulence tout en déviant utilement le flux d'air résultant du mélange précédent et parvenant à l'entrée du ventilateur 3.

Les déflecteurs considérés sont de préférence réalisés en un matériau léger, non corrodable par l'air chaud et humide, tel que l'amiante-ciment, le bois, certains alliages d'aluminium, des polymères organiques synthétiques. L'acier galvanisé ou l'acier inoxydable peut également convenir.

Dans le présent mode de réalisation, les déflecteurs sont maintenus en place par des barres 15 ancrées dans les parois de la tour 1. Ils peuvent également être fixés par des haubans ou accrochés d'une part à leurs sommets et d'autre part dans les parois ou à l'ossature de la tour.

Ainsi qu'on peut le voir à la Fig. 3, les pointes des déflecteurs 12 destinées à infléchir le flux d'air sec sont dirigées vers les entrées d'air 9 du corps d'échange thermique sec.

De la même manière, les pointes des déflecteurs 13 destinées à agir sur le flux d'air humide sont dirigées vers le corps d'échange thermique humide 5.

Les plaques constituant les déflecteurs se présentent comme des ailes d'avion et, compte tenu de leur disposition indiquée ci-dessus, les flux d'air du réfrigérant les attaquent par leurs pointes. De tels déflecteurs en forme d'ailes ont la propriété d'engendrer dans les flux d'air qui les quittent à la base de l'aile deux lignes de tourbillons en aval des extrémités de cette base (Fig. 11), qui sont les deux sommets symétriques du triangle isocèle constituant chacune des plaques déflectrices. Ces tourbillons donnent dans la chambre de mélange 11 du réfrigérant une turbulence qui assure un brassage des flux d'air et, en conséquence, le mélange des airs humide et sec. Ils assurent cette fonction en infléchissant un flux d'air vers l'autre et en y injectant des tourbillons.

Le réfrigérant représenté à la Fig. 4 est semblable à celui décrit en référence aux Fig. 1 à 3 à l'exception du fait que le dispositif de mélange des flux d'air secs et humides monté dans la chambre de mélange 11 est constitué par des déflecteurs 15' destinés à agir sur le flux d'air sec et par des déflecteurs 16 destinés à agir sur le flux d'air humide, ces déflecteurs étant portés par des barres communes 17 fixées dans les parois de la chambre de mélange 11.

Dans le présent mode de réalisation, chaque barre 17 porte deux déflecteurs 15' pour le flux sec et un déflecteur 16 pour le flux humide. Les déflecteurs 15' et 16 sont respectivement inclinés vers les flux d'air sec et d'air humide qu'ils sont destinés à dévier et à mélanger.

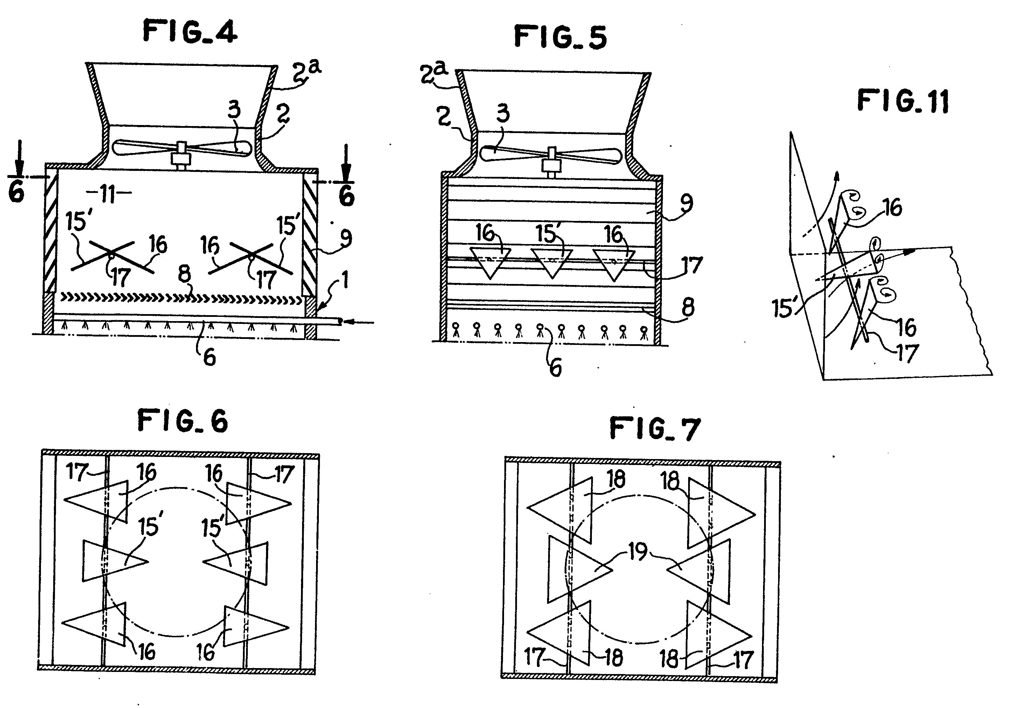

Le réfrigérant représenté à la Fig. 7 est semblable à celui des Fig. 4 à 6 à l'exception du fait que les éléments triangulaires formant les déflecteurs 18 et 19 de ce mode de réalisation présentent des bases de plus grande longueur que les déflecteurs 15' et 16 correspondants.

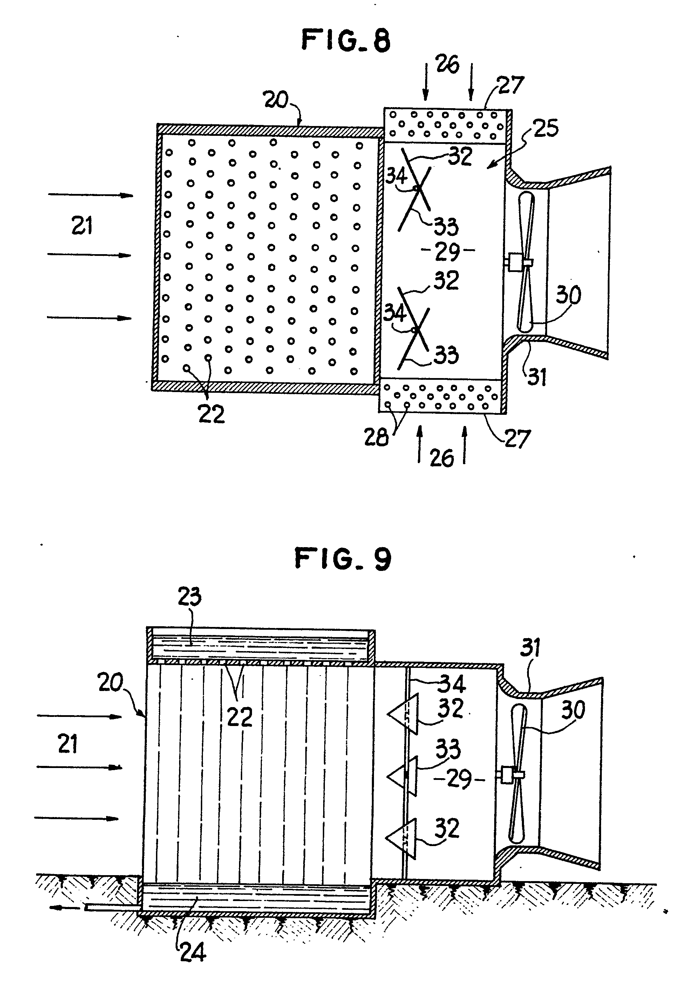

Le réfrigérant représenté aux Fig. 8 et 9 est un réfrigérant à circulation d'air horizontale.

Il comprend un échangeur thermique humide 20 à courants croisés comportant une entrée d'air 21 et un réseau de distribution d'eau constitué par des ajutages disperseurs 22 alimentés par exemple par un réservoir 23 à ciel ouvert. L'eau de ruissellement est recueillie dans un bassin 24.

A la sortie du corps d'échange thermique humide 20 est placé un corps d'échange thermique sec 25 comportant des entrées d'air 26 disposées perpendiculairement à l'entrée d'air 21 du corps d'échange thermique humide 20, constitué par exemple par deux échangeurs thermiques 27 formés chacun d'une batterie de tubes lisses verticaux 28 en matière plastique.

Les corps d'échange thermique précités définissent une chambre 29 de mélange des flux d'air secs et humides.

Le réfrigérant comporte en outre un ventilateur 30 d'aspiration du mélange hors de la chambre 29, ledit ventilateur étant monté dans une virole 31 qui définit l'orifice d'aspiration de celui-ci.

Dans la chambre de mélange 29 sont disposées des plaques déflectrices 32 destinées à agir sur les flux d'air humide et des plaques déflectrices 33 destinées à agir sur les flux d'air sec, portées par des barres verticales communes 34 fixées dans les parois de la chambre de mélange 29.

Les plaques déflectrices sont en forme de triangle isocèle et leur sommet opposé à leur base est tourné vers l'amont du flux dans lequel chaque plaque est placée. Chaque plaque 32, 33 est en outre inclinée de manière appropriée par rapport à la direction du flux dans lequel elle est placée, afin d'assurer un mélange optimal des flux d'air sec et humide.

Le réfrigérant représenté à la Fig. 10 comporte des corps d'échange thermique humide à courants croisés 35 comportant des entrées d'air 36, des réservoirs 37 destinés à délivrer l'eau de ruissellement aux corps d'échange thermique et un bassin 38 destiné à recevoir l'eau après ruissellement.

Au-dessus des réservoirs 37 pour l'eau de ruissellement sont disposés des corps d'échange thermique sec 39 comportant des entrées d'air 40, un ventilateur d'aspiration 41 étant placé dans une virole 42 surmontée d'un diffuseur 43 au-dessus des corps d'échange sec 39.

Dans l'espace délimité par les corps d'échange thermique humide 35 et les corps d'échange thermique sec 39, sont disposées des plaques déflectrices triangulaires 45 pour les flux d'air sec et 46 pour les flux d'air humide, portées par des barres 47 ancrées dans les parois du réfrigérant.

La disposition relative des plaques déflectrices 45 et 46 est choisie pour assurer un mélange optimal des flux d'air sec et humide tout en les canalisant vers le ventilateur d'aspiration 41.

Les dispositifs mélangeurs de l'invention viennent d'être décrits comme étant appliqués à des réfrigérants à tirage induit par ventilateur. On comprendra toutefois que ces dispositifs peuvent s'appliquer également à des réfrigérants à tirage naturel. En outre, les réfrigérants représentés aux Fig. 1 et 4 sont des réfrigérants à section rectangulaire. Mais l'invention s'applique de la même manière à des réfrigérants de section circulaire.

Dans les agencements qui viennent d'être décrits, les plaques de déflexion sont constituées par des triangles isocèles comme représenté à la Fig. 12. Cependant, des plaques déflectrices de forme triangulaire quelconque, rectiligne ou curviligne, conviendraient également dans certains cas. Il suffit de placer une base du triangle perpendiculairement à la direction du flux d'air considéré et de disposer le sommet opposé à cette base vers l'amont de ce flux.

Plus généralement, les plaques déflectrices peuvent présenter n'importe quelle autre forme appropriée ayant dans son ensemble la forme d'une aile d'avion comme représenté aux Fig. 13 à 21.

C'est ainsi qu'à la Fig. 13, les deux côtés égaux 50 du triangle isocèle de la Fig. 12 sont remplacés chacun par deux segments rectilignes 51 et 52 définissant un polygone convexe, tandis qu'à la Fig. 14, les segments correspondants 53 et 54 définissent un polygone concave.

A la Fig. 15, c'est la base 55 du triangle de la Fig. 12 qui est remplacée par deux segments 56 et 57 définissant soit un polygone convexe comme représenté en trait plein, soit un polygone concave comme représenté en traits mixtes.

A la Fig. 16, la base 58 du triangle est constituée par une courbe convexe (trait plein) ou concave (traits mixtes).

A la Fig. 17, les deux angles égaux du triangle isocèle sont tronqués et la base 59 est raccordée aux deux côtés latéraux rectilignes 50 par des segments obliques 60.

Enfin, aux Fig. 18 à 21, les côtés latéraux 61 de la plaque sont curvilignes et peuvent être convexes (Fig. 18), concaves (Fig. 19), concaves à partir de la base puis convexes en direction du sommet après un point d'inflexion (Fig. 20), soit encore convexes à partir de la base puis concaves en direction du sommet après un point d'inflexion (Fig. 21).

Bien entendu, les formes des côtés latéraux et de la base des plaques représentées aux Fig. 12 à 21 peuvent être combinées ensemble de manière différente, ces formes spécifiques étant données uniquement à titre d'exemples illustratifs de l'invention, l'essentiel étant que les plaques aient dans l'ensemble en plan une forme d'aile d'avion (aile delta, simple ou double, gothique ou ogivale), de manière à engendrer, comme des ailes d'avion réelles, des tourbillons à leurs extrémités.

Les dispositifs pour le mélange de flux d'air sec et humide qui viennent d'être décrits présentent l'avantage de créer peu de pertes de charges et d'être d'une mise en œuvre relativement aisée.

**Revendications**

1. Dispositif pour le mélange des flux d'air secs et humides de réfrigérant atmosphérique mixte à flux d'air parallèles comportant un corps d'échange thermique humide (5) et un corps d'échange thermique sec (10), disposés en parallèle dans les flux d'air, le dispositif pour le mélange des flux d'air secs et humides comprenant des surfaces de déflexion des flux d'air secs et humides disposées en aval des corps d'échange thermique et étant caractérisé en ce que lesdites surfaces de déflexion sont constituées par des plaques (12, 13 ; 15 ; 16 ; 18) en forme d'aile d'avion ayant une base transversale à la direction des flux d'air correspondants, lesdites plaques étant inclinées par rapport aux directions des flux d'air secs et humides qu'elles sont destinées à dévier respectivement, les sommets des plaques opposés à leurs côtés transversaux auxdits flux d'air étant dirigés vers l'amont des flux respectifs sur le trajet desquels elles sont placées.

2. Dispositif suivant la revendication 1, caractérisé en ce que lesdites plaques en forme d'aile d'avion (12) destinées à dévier les flux d'air secs sont disposées en rangées en regard des entrées (9) d'air du corps d'échange thermique sec dans le réfrigérant tandis que lesdites plaques en forme d'aile d'avion (13) destinées à dévier les flux d'air humides sont disposées en rangées parallèles aux précédentes, en aval du corps d'échange thermique humide (5).

3. Dispositif suivant la revendication 1, caractérisé en ce que lesdites plaques en forme d'aile d'avion (15 ; 18) destinées à dévier les flux d'air secs et célles (16 ; 19) destinées à dévier les flux d'air humides sont réparties de façon alternée en rangées communes.

4. Dispositif suivant l'une quelconque des revendications 1 à 3, caractérisé en ce que lesdites plaques en forme d'aile d'avion ont la forme de triangles rectilignes ou curvilignes.

5. Dispositif suivant la revendication 4, caractérisé en ce que lesdits triangles sont des triangles isocèles.

6. Dispositif suivant l'une quelconque des revendications 4 et 5, caractérisé en ce que l'angle au sommet des plaques déflectrices triangulaires est inférieur à 65°.

7. Dispositif suivant l'une quelconque des revendications 1 à 3, caractérisé en ce que lesdites plaques en forme d'aile d'avion ont la forme de polygones convexes ou concaves.

8. Dispositif suivant l'une quelconque des revendications précédentes, caractérisé en ce que lesdites plaques déflectrices sont portées par des haubans ou des barres fixées dans les parois de la tour du réfrigérant ou à son ossature.

## Claims

1. A device for mixing the flows of dry air and humid air of a composite cooler employing the air of the atmosphere and parallel air flows, comprising a humid heat exchange unit (5) and dry heat exchange unit (10) disposed in parallel in the air flows, the device for mixing the dry and humid air flows comprising surfaces for deflecting dry and humid air flows disposed downstream of the heat exchange unit and being characterised in that said deflecting surfaces are constituted by plates (12, 13 ; 15 ; 16 ; 18) in the shape of an aircraft wing having a base transverse to the direction of the corresponding air flows, said plates being inclined relative to the directions of the dry and humid air flows that they are adapted to deviate respectively, the apices of the plates opposed to their sides transverse to said air flows being directed in the upstream direction of the respective flows on the path of which they are disposed.

2. A device according to claim 1, wherein said plates in the shape of an aircraft wing (12) adapted to deviate the dry air flows are disposed in rows in front of air inlets 9 of the dry heat exchange body in the cooler, whereas said plates in the shape of an aircraft wing (13) adapted to deviate the humid air flows are disposed in rows parallel to the preceding rows downstream of the humid heat exchange unit (5).

3. A device according to claim 1, characterised in that said plates in the shape of an aircraft wing (15 ; 18) adapted to deviate the dry air flows and those (16 ; 19) adapted to deviate the humid air flows are arranged in alternating fashion in common rows.

4. A device according to claim 1, 2 or 3, characterised in that said plates in the shape of an aircraft wing have the shape of rectilinear or curvilinear triangles.

5. A device according to claim 4, characterised in that said triangles are isoceles triangles.

6. A device according to claim 4 or 5, characterised in that the angle at the apex of the triangular deflecting plates is less than 65°.

7. A device according to claim 1, 2 or 3, characterised in that said plates in the shape of an aircraft wing have the shape of convex or concave polygons.

8. A device according to any one of the preceding claims, characterised in that said deflecting plates are carried by guys or bars fixed in the walls of the tower of the cooler or to the framework thereof.

## Ansprüche

1. Anordnung zum Mischen von Trockenluftströmung und Feuchtluftströmung eines atmosphärischen Mischkühlers mit Paralleluftströmung, der einen Feuchtwärmetauschkörper (5) und einen Trockenwärmetauschkörper (10) parallel in der Luftströmung angeordnet umfaßt sowie Ablenkflächen für die Trockenluftströmung und die Feuchtluftströmung stromabwärts der Wärmetauschkörper, dadurch gekennzeichnet, daß die Ablenkflächen von Platten (12, 13 ; 15 ; 16 ; 18) in Form von Flugzeugflügeln gebildet sind mit einer Querbasis in Richtung der zugeordneten Luftströmung, welche Platten relativ zu den Richtungen der Feuchtluftströmung und der Trockenluftströmung, die sie jeweils abzulenken haben, geneigt angeordnet sind, wobei die Spitzen der Platten entgegengerichtet ihren quer zu der Luftströmung verlaufenden Seiten in Richtung nach stromaufwärts der jeweiligen Strömungen gerichtet sind, auf deren Bahn sie plaziert sind.

2. Anordnung nach Anspruch 1, dadurch gekennzeichnet, daß die Platten in Form von Flugzeugflügeln (12), die dazu bestimmt sind, die Trockenluftströmung abzulenken, in Reihen ausgefluchtet mit Einlässen (9) für die Luft des Trockenwärmetauschkörpers in dem Kühler angeordnet sind, während die flugzeugflügelförmigen Platten (13) zum Ablenken der Feuchtluftströmung in Reihen parallel zu den vorgenannten angeordnet sind stromabwärts des Feuchtwärmetauschkörpers.

3. Anordnung nach Anspruch 1, dadurch gekennzeichnet, daß die flugzeugflügelförmigen Platten (15 ; 18) zum Ablenken der Trockenluftströmung und jene (16 ; 19) zum Ablenken der Feuchtluftströmung alternierend in gemeinsamen Reihen angeordnet sind.

4. Anordnung nach einem der Ansprüche 1 bis 3, dadurch gekennzeichnet, daß die flugzeugflügelförmigen Platten dreieckförmig mit geraden oder gekrümmten Seiten sind.

5. Anordnung nach Anspruch 4, dadurch gekennzeichnet, daß die Dreiecke gleichseitige Dreiecke sind.

6. Anordnung nach Anspruch 4 und 5, dadurch gekennzeichnet, daß der Spitzenwinkel der dreieckigen Ablenkplatten kleiner als 65° ist.

7. Anordnung nach einem der Ansprüche 1 bis 3, dadurch gekennzeichnet, daß die flugzeugflügelförmigen Platten konvexe oder konkave Polygonform aufweisen.

8. Anordnung nach einem der vorangehenden Ansprüche, dadurch gekennzeichnet, daß die Ablenkplatten von Spanten oder Stangen getragen sind, die in den Wandungen des Kühlturmes befestigt sind oder an seinem Gerüst.

FIG_1

FIG_2

FIG_3

FIG_10

FIG_4

FIG_5

FIG.11

FIG_6

FIG_7

0 020 191

## FIG. 8

## FIG. 9

# FIG. 12

50
55
50

# FIG. 13

51
52
52
51

# FIG. 15

56
56
57
57

# FIG. 14

53
54
53
54

# FIG. 16

58
58

# FIG. 17

60
50
59
50
60

# FIG. 18

61
61

# FIG. 19

61
61

# FIG. 20

61
61

# FIG. 21

61
61